(19) Europäisches Patentamt / European Patent Office / Office européen des brevets

(11) **EP 4 115 175 B1**

(12) **FASCICULE DE BREVET EUROPEEN**

(45) Date de publication et mention de la délivrance du brevet:
**17.04.2024 Bulletin 2024/16**

(21) Numéro de dépôt: **21711305.9**

(22) Date de dépôt: **23.02.2021**

(51) Classification Internationale des Brevets (IPC):
**G01N 23/2209** (2018.01)    **G01N 23/2252** (2018.01)
**G01N 15/14** (2024.01)

(52) Classification Coopérative des Brevets (CPC):
**G01N 23/2209; G01N 23/2252;** G01N 2015/1493;
G01N 2015/1497

(86) Numéro de dépôt international:
**PCT/FR2021/050312**

(87) Numéro de publication internationale:
**WO 2021/176163 (10.09.2021 Gazette 2021/36)**

(54) **PROCÉDÉ D'ANALYSE ÉLÉMENTAIRE DE SOLIDES DIVISÉS**

VERFAHREN ZUR ELEMENTAREN ANALYSE VON GETEILTEN FESTSTOFFEN

METHOD FOR ELEMENTARY ANALYSIS OF DIVIDED SOLIDS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.03.2020 FR 2002082**

(43) Date de publication de la demande:
**11.01.2023 Bulletin 2023/02**

(73) Titulaire: **Commissariat à l'énergie atomique et aux énergies alternatives 75015 Paris (FR)**

(72) Inventeurs:
• **BRACKX, Emmanuelle 30630 GOUDARGUES (FR)**
• **ESSANI, Mouad 30200 BAGNOLS SUR CEZE (FR)**
• **EXCOFFIER, Emmanuel 84230 CHATEAUNEUF-DU-PAPE (FR)**

(74) Mandataire: **Brevalex Tour Trinity 1 B Place de la Défense 92400 Courbevoie (FR)**

(56) Documents cités:
• CHUL-UN RO ET AL: "A Monte Carlo Program for Quantitative Electron-Induced X-ray Analysis of Individual Particles", ANALYTICAL CHEMISTRY, vol. 75, no. 4, 1 février 2003 (2003-02-01), pages 851-859, XP055741569, ISSN: 0003-2700, DOI: 10.1021/ac025973r cité dans la demande
• JORGE TRINCAVELLI ET AL: "Standardless quantification methods in electron probe microanalysis", SPECTROCHIMICA ACTA. PART B: ATOMIC SPECTROSCOPY., vol. 101, 1 novembre 2014 (2014-11-01), pages 76-85, XP055741542, US ISSN: 0584-8547, DOI: 10.1016/j.sab.2014.07.016 cité dans la demande
• C Merlet ET AL: "Near-threshold absoluteM-shell x-ray production cross sections of Au and Bi by electron impact", Physical review. A, Atomic, molecular, and optical physics, 1 août 2008 (2008-08-01), XP055741927, DOI: 10.1103/PhysRevA.78.022704 Extrait de l'Internet: URL:https://journals.aps.org/pra/pdf/10.11 03/PhysRevA.78.022704

- **TRINCAVELLI ET AL: "The prediction of thick target electron bremsstrahlung spectra in the 0.25-50 keV energy range", SPECTROCHIMICA ACTA. PART B: ATOMIC SPECTROSCOPY, NEW YORK, NY, US, US, vol. 63, no. 1, 22 novembre 2007 (2007-11-22), pages 1-8, XP022414190, ISSN: 0584-8547, DOI: 10.1016/J.SAB.2007.11.009**

**Description**

**DOMAINE TECHNIQUE**

La présente invention a trait à l'analyse élémentaire (c'est-à-dire à la quantification de la composition élémentaire) d'un échantillon de type microparticule, d'un échantillon ayant une macroporosité de surface ou bien encore d'un échantillon de type microparticule ayant une macroporosité de surface.

**TECHNIQUE ANTÉRIEURE**

La synthèse et l'élaboration de poudres ou d'agglomérats est une problématique partagée par de nombreux secteurs industriels. On peut notamment citer les secteurs ayant trait à la fabrication et/ou à l'utilisation de catalyseurs, à la réalisation de composites, à la fabrication additive ou bien encore à la cimenterie.

Une caractérisation physicochimique précise est essentielle pour la compréhension du comportement, en service, de ces poudres, ainsi que pour la maîtrise de leurs procédés d'élaboration. En effet, selon le procédé choisi, les poudres formées sont généralement composées de particules de tailles et de formes différentes.

La polydispersité, la morphologie et la composition élémentaire sont des paramètres majeurs vis-à-vis de la réactivité de ces poudres et de ces agglomérats, en particulier pour les poudres au cours des étapes qu'elles sont destinées à subir (transport, filtration, calcination, frittage), les poudres étant sensibles aux phénomènes d'agglomération et de ségrégation.

Dans le cadre de la présente invention, on considère qu'un échantillon est une micro- particule lorsque sa plus grande dimension est supérieure ou égale à 1 $\mu$m et inférieure à 500 $\mu$m. En effet, dans le cas de la microanalyse X, la taille des particules qui a une influence sur l'émission des rayons X est comprise dans cette gamme de valeurs. Un échantillon ayant une surface macroporeuse présente, en surface, une pluralité d'éléments vides et/ou pleins, dont la plus grande dimension est supérieure ou égale à 50 nm et inférieure ou égale à 4 $\mu$m. Ces dimensions sont mesurées par une analyse d'image, par exemple à l'aide d'un microscope électronique. Une pluralité d'éléments vides et/ou pleins s'entend comme au moins deux éléments de même catégorie (c'est-à-dire vide ou plein) ; on peut donc avoir, par exemple, au moins deux éléments vides; ou au moins deux éléments pleins ; ou au moins deux éléments vides et un élément pleins, etc. ; mais pas un seul élément vide et un seul élément plein.

Pour observer et caractériser de manière morphologique des microparticules et des échantillons ayant une macroporosité en surface, on peut utiliser un microscope électronique à balayage (MEB).

Pour obtenir des informations de compositions chimiques élémentaires de ces échantillons, on peut utiliser la spectrométrie des rayons X. C'est ce qu'on appelle la microanalyse X, dont nous allons rappeler ci-dessous les principes de fonctionnement.

Lorsqu'un faisceau d'électrons bombarde une cible, il se produit dans la matière une diversité d'interactions entre les électrons et les atomes de la cible qui conduisent, entre autres, à l'émission de rayons X. Les photons X ainsi émis sont dits caractéristiques quand leur émission est provoquée par une ionisation de l'atome cible, suivie par sa désexcitation. La désexcitation de l'atome est régie par des lois probabilistes de relaxation atomique et dépend des transitions électroniques spécifiques à chaque élément chimique.

L'identification de chaque élément chimique s'effectue ensuite par la localisation, dans le spectre des rayons X obtenu, des raies caractéristiques (également appelées « pics ») en fonction de leur distribution soit énergétique (lorsqu'on utilise un spectromètre à sélection d'énergie (EDS)), soit en longueurs d'ondes (lorsqu'on utilise un spectromètre à dispersion de longueurs d'onde (WDS)).

Le spectre des rayons X mesuré contient également un signal du fond constitué majoritairement du rayonnement de Bremsstrahlung. Ce rayonnement provient du freinage des électrons incidents par le champ moyen du noyau de l'atome cible. Il dépend du nombre atomique moyen de l'échantillon et peut également donner des informations supplémentaires sur la composition élémentaire de la cible.

L'utilité de la microanalyse X réside dans la possibilité de mener une analyse qualitative, quantitative, locale et non destructive. L'analyse est locale car, en microanalyse X, le volume d'analyse est de l'ordre de quelques micromètres.

L'analyse quantitative consiste à obtenir le titre massique $C_i$ (nombre sans unité, également appelé teneur massique ou concentration) de chaque élément i présent dans un échantillon inconnu à partir des rapports entre l'intensité de la raie caractéristique émise par cet élément chimique et l'intensité émise par le même élément chimique dans un témoin dont la stoechiométrie est connue. Ce rapport d'intensité relative, noté k-ratio ou première approximation de Castaing, est ensuite corrigé des effets de matrice par des facteurs correctifs conventionnels tels que les facteurs de type ZAF ou de type $\varphi(\rho z)$ (document **[1]**).

Parmi les procédures de quantification conventionnelles pour la microanalyse X, on trouve celles réalisées avec étalons (également appelés standards) et celles réalisées sans.

Les procédures de quantification avec standards pour la microanalyse X sont limitées au cas des échantillons massifs, plans et polis (c'est-à-dire au cas des échantillons où le volume d'interaction électron-matière est totalement contenu à l'intérieur du volume sondé). Ces procédures présentent des limitations quand l'analyse concerne des poudres ou des agglomérats (par exemple obtenus par frittage de poudres), ces limitations étant essentiellement dues aux pertes d'intensités liées aux effets de géométrie et aux effets de matrice. En effet, en comparaison avec des échantillons massifs et polis, le volume d'interaction électron-matière, ainsi que les effets de masse, d'absorption et de fluorescence se manifestent différemment lors de l'analyse de microparticules. Ces effets deviennent de plus en plus importants lorsque la mesure est réalisée à une incidence du faisceau électronique différente de la normale, ou bien si le matériau présente des hétérogénéités (caractère poreux et/ou rugosité de surface). Cela se traduit par des pertes significatives d'intensité des rayons X au sein de l'échantillon étudié, ce qui entache les résultats quantitatifs d'erreurs.

Les procédures de quantification sans standards (document **[1]**) ont été développées afin d'adapter la microanalyse quantitative à l'étude des échantillons non conventionnels. Le concept est basé sur le calcul d'intensités virtuelles servant comme standards de quantification, en tenant compte des paramètres structuraux de l'échantillon étudié. En principe, il existe deux approches pour le calcul des intensités :

- l'approche analytique nommée $\varphi(\rho z)$, qui est basée sur la fonction de distribution en profondeur des rayons X ; et
- l'approche analytique, qui est basée sur la simulation Monte Carlo (MC).

Afin de pouvoir effectuer un calcul rigoureux des intensités, la simulation MC nécessite une description adéquate de la morphologie de l'échantillon et des paramètres instrumentaux. Il existe des codes de simulation MC particuliers, qui sont dotés d'ensembles de géométrie permettant d'implémenter la structure de l'échantillon. Mais les résultats obtenus avec ces méthodes de quantification sans standards sont encore entachés d'erreurs, en particulier pour les échantillons de type microparticules. En outre, la quantification des microparticules devient très compliquée quand l'analyse s'effectue à un angle d'incidence différent de la normale, ce qui peut également fausser les résultats quantitatifs.

En effet, parmi les effets qui influencent les procédures quantitatives, il y a l'effet de taille de l'échantillon et l'effet lié à la texture de surface de l'échantillon. L'effet de taille se manifeste quand l'échantillon a une petite taille (i.e. volume de l'échantillon inférieur ou proche du volume d'interaction électron matière), ce qui est le cas des microparticules. L'effet de texture de surface (tel que les effets liés à une rugosité ou une porosité de surface) se manifeste à cause de la surface non plane, qui va avoir un impact sur l'incidence des électrons et sur l'émission des rayons X.

Document [3] divulgue un procédé d'analyse élémentaire d'un échantillon de type microparticule, le procédé comprenant : la réalisation d'une image de l'échantillon à l'aide d'un microscope électronique à balayage ; à partir de cette image, la détermination du caractère de l'échantillon, l'échantillon étant considéré comme étant une microparticule si sa plus grande dimension est supérieure ou égale à 1 $\mu$m et inférieure à 500 $\mu$m et si l'échantillon est déterminé comme étant une microparticule, la détermination des dimensions, de la densité et de la forme de cette microparticule ; l'acquisition d'un spectre mesuré de raies X de l'échantillon à l'aide d'un dispositif de microanalyse, moyennant quoi on obtient $(I_P)_{i,mes}$ pour chacun des n pics du spectre mesuré, avec i=1 à n ; l'acquisition d'un spectre simulé de raies X de l'échantillon par simulation Monte Carlo en prenant en compte la densité, les dimensions et la forme de l'échantillon, ainsi que la résolution du dispositif de microanalyse, moyennant quoi on obtient $(I_P)_{i,sim}$ pour chacun des i pics du spectre simulé ; le calcul itératif des concentrations Ci des éléments de l'échantillon.

**EXPOSÉ DE L'INVENTION**

Les inventeurs se sont fixé comme but de développer une procédure quantitative sans standard qui soit adaptée au cas des microparticules et des échantillons présentant une macroporosité de surface. Ils y sont parvenus en développant un procédé d'analyse élémentaire d'un échantillon de type microparticule et/ou ayant une macroporosité de surface, le procédé comprenant :

- la réalisation d'une image de l'échantillon à l'aide d'un microscope électronique à balayage ;
- à partir de cette image, la détermination du caractère de l'échantillon, l'échantillon étant considéré comme étant une microparticule si sa plus grande dimension est supérieure ou égale à 1 $\mu$m et inférieure à 500 $\mu$m et/ou étant considéré comme ayant une macroporosité de surface si sa surface présente une pluralité d'éléments vides et/ou pleins dont la plus grande dimension est supérieure ou égale à 50 nm et inférieure ou égale à 4 $\mu$m ; et

    * si l'échantillon est déterminé comme étant une microparticule, la détermination des dimensions, de la densité et de la forme de cette microparticule ;
    * si l'échantillon est déterminé comme ayant une macro- porosité de surface, la détermination des dimensions et de la forme des éléments vides et/ou pleins formant cette macroporosité, et la détermination de la densité de l'échantillon; ou

\* si l'échantillon est déterminé comme étant une microparticule ayant une macroporosité de surface, la détermination des dimensions et de la forme de cette microparticule, la détermination des dimensions et de la forme des éléments vides et/ou pleins formant cette macroporosité, et la détermination de la densité de l'échantillon ;

- l'acquisition d'un spectre mesuré de raies X de l'échantillon à l'aide d'un dispositif de microanalyse (par exemple une microsonde électronique), moyennant quoi on obtient $(I_P)_{i,\,mes}$ pour chacun des n pics du spectre mesuré, avec i=1 à n ;
- l'acquisition d'un spectre simulé de raies X de l'échantillon par simulation Monte Carlo en prenant en compte la densité, les dimensions et la forme de l'échantillon, ainsi que la résolution du dispositif de microanalyse, moyennant quoi on obtient $(I_P)_{i,\,sim}$ pour chacun des i pics du spectre simulé ;
- la détermination des intensités $(I_{Bg})_{i,\,mes}$ via la construction du fond continu du spectre mesuré en appliquant l'équation suivante :

$$I_{Bg}(E) = K \left( \frac{(E_o - E)}{E} \right)^a \frac{1}{1 + b(\gamma\chi) + c(\gamma\chi)^2}$$

avec $\gamma = E_0^{1,65} - E_{Bg}^{1,65}$ et $\chi = {}^d/_{E^m}$

où K est un facteur d'étalonnage tenant compte de paramètres instrumentaux du dispositif de microanalyse, $E_0$ est l'énergie des électrons incidents en keV, $E$ est l'énergie du pic, $a,\ b,\ c,\ d\ et\ m$ sont des constantes d'ajustement,
moyennant quoi on obtient $(I_{Bg})_{i,\,mes}$ pour chacun des i pics du spectre mesuré ;

- le calcul itératif des concentrations $C_i$ des éléments de l'échantillon en appliquant l'équation suivante :

$$C_i^{k+1} = \frac{\left( {}^{I_P}/_{I_{Bg}} \right)_{i,mes}}{\left( {}^{I_P}/_{I_{Bg}} \right)_{i,sim} \times \sum_i \frac{\left( {}^{I_P}/_{I_{Bg}} \right)_{i,mes}}{\left( {}^{I_P}/_{I_{Bg}} \right)_{i,sim}} \times C_i^k} \times C_i^k$$

l'itération commençant avec k=1 et étant arrêtée lorsque :

$$C_{k+1} - C_k \sim 10^{-3}\ (\text{à} \pm 10^{-4})$$

On rappelle que $I_{i,\,mes}$ et $I_{i,\,sim}$ sont respectivement l'intensité mesurée et l'intensité simulée (pour $I_P$ ou $I_{Bg}$) pour la raie caractéristique du i[ème] élément constituant l'échantillon.

La formule utilisée pour le calcul itératif tient compte de la perte d'intensité due aux effets de texture de surface, ainsi qu'aux effets géométriques de l'échantillon.

Selon une première variante, l'échantillon est une microparticule de verre sphérique.

Selon une deuxième variante, l'échantillon est un échantillon ayant une composition chimique avec au moins un élément de numéro atomique supérieur à 11 et au moins un élément de numéro atomique inférieur ou égal à 9 et ayant une macroporosité de surface. Cet échantillon peut par exemple résulter de l'agglomération de microparticules de poudre.

Le procédé selon l'invention est ainsi applicable à l'analyse de la composition élémentaire de poudres constituées de microparticules, ces poudres étant sous forme de particules libres, ou bien sous forme de particules agglomérées, formant alors un échantillon présentant une macroporosité de surface. Le procédé selon l'invention permet en effet d'obtenir une mesure précise de la composition élémentaire en tenant compte de la morphologie complexe de ces poudres.

La présente invention, appliquée à l'analyse élémentaire de microparticules, peut permettre à l'industriel de qualifier la qualité chimique et la pureté de la production de poudres.

## BRÈVE DESCRIPTION DES DESSINS

La présente invention sera mieux comprise à la lecture de la description qui va suivre, donnée à titre purement indicatif et nullement limitatif, en faisant référence aux dessins annexés sur lesquels :

- la figure 1a est une comparaison entre les spectres simulés et expérimentaux d'un échantillon massif ayant une composition chimique avec au moins un élément de numéro atomique supérieur à 11 et au moins un élément de numéro atomique inférieur ou égal à 9, en l'occurrence un échantillon de MgO ;
- la figure 1b est une comparaison entre les spectres simulés et expérimentaux d'un échantillon massif ayant une composition chimique avec au moins un élément de numéro atomique supérieur à 11 et au moins un élément de numéro atomique inférieur ou égal à 9, en l'occurrence un échantillon de $Al_2O_3$ ;
- la figure 2 est une image MEB d'une particule sphérique de verre déposée sur un substrat ;
- la figure 3 est l'illustration de la construction d'une configuration (particule sphérique sur substrat) obtenu à l'aide d'un logiciel de représentation graphique de géométrie ;
- la figure 4 est une représentation schématique décrivant la variation de l'angle d'incidence du faisceau électronique sur une microparticule sphérique.

## DESCRIPTION DÉTAILLÉE DE MODES DE RÉALISATION

L'objectif de la présente invention est la mise au point d'une méthode d'analyse quantitative sans standard d'échantillons dont la morphologie est susceptible de provoquer des pertes d'intensité des rayons X, que ce soit par des effets géométriques de forme et/ou par des effets de texture (porosité/rugosité de surface) induisant des effets géométriques. Il s'agit des échantillons de type microparticule présentant ou non une surface microporeuse.

Il est primordial de connaître avec précision la réponse du détecteur utilisé pour les analyses sans témoin, car cela peut induire plusieurs incertitudes si les paramètres instrumentaux sont mal définis. L'approche développée dans le cadre de l'invention permet de réduire les incertitudes liées à la réponse du détecteur face à ces effets de texture de surface et/ou d'effets géométriques et donc d'améliorer la précision des résultats quantitatifs.

### Montage expérimental

L'acquisition des rayons X a été effectuée en utilisant un microscope électronique à balayage (MEB) de référence « MERLIN » du fournisseur Carl Zeiss, couplé à un spectromètre EDS de référence « X-Max » du fournisseur Oxford Instruments, positionné à un angle d'inclinaison (angle de « take-off » en anglais) de 35°.

Le microscope MEB est utilisé pour obtenir une image à l'échelle micrométrique de l'échantillon. C'est ce qui va nous permettre de connaître la morphologie de l'échantillon.

Une méthode pour déterminer les dimensions et la forme d'une particule à partir d'une image MEB est par exemple décrite dans le document **[2]**.

Le détecteur EDS est utilisé pour déterminer la composition chimique de l'échantillon.

Le spectromètre utilisé comporte un détecteur SDD (pour « silicon drift detector » en anglais), ayant une zone de détection effective de 80 mm$^2$, ainsi qu'une fenêtre d'entrée supportée par une structure de support du type grille en silicium. La fenêtre d'entrée du spectromètre est une fenêtre AP3.3, qui est composée de couches ultra-minces de polymère DuraCoat™ et d'aluminium.

Les mesures à l'aide du spectromètre ont été réalisées avec une résolution du détecteur de 125eV à la raie Mn K$\alpha$ et un courant électronique de 200 pA. Ces conditions ont été optimales pour une bonne résolution et un temps mort inférieur à 30% du taux de comptage total. En effet, les incertitudes ont été estimées comme étant d'environ 1-2% pour les pics caractéristiques et d'environ 2 à 7% pour les intensités du fond continu.

Dans cet exemple, nous avons utilisé comme dispositif de micro-analyse un spectromètre EDS, mais on pourrait également pu utiliser un spectromètre WDS.

## Calcul des intensités virtuelles

Les intensités virtuelles ont été calculées en utilisant un code de simulation Monte Carlo dédié à la modélisation du transport des électrons et des photons au sein de la matière.

Cette modélisation est basée sur la description d'un faisceau d'électron, de l'échantillon analysé, d'un substrat et d'un détecteur de mesure pour la collection des photons générés comme particules secondaires lors de l'interaction électron-matière.

Le code de simulation MC particulier permet la reconstruction d'un spectre de mesure EDS (ou d'un spectre de mesure WDS) via la connaissance de l'efficacité du spectromètre et de la forme spectrale des pics en énergie (ou en longueur d'onde pour le WDS), forme qui est due à la réponse instrumentale du dispositif de mesure.

Étant donné que la procédure quantitative développée dans la présente invention se base sur un rapport entre l'intensité caractéristique et l'intensité du fond continu $I_P/I_{Bg}$, le calcul des concentrations sera indépendant de l'efficacité de détection et ne dépendra donc que de la résolution du détecteur. Cela permet de réduire les incertitudes liées à la détermination de l'efficacité de détection.

Les intensités obtenues par simulation avec le code MC particulier sont données en unité absolue ($I_{abs}$) et ne contiennent aucune largeur spectrale. De ce fait, la largeur spectrale due à la résolution du détecteur a été introduite dans les intensités simulées en appliquant l'équation (1) suivante :

$$I_{sim}(E_m) = \int_0^\infty I_{abs}(E) \times R(E, E_m) \times dE$$

où $R(E, E_m)$ est la fonction de résolution du détecteur.

La fonction de résolution du détecteur $R(E, E_m)$ est considérée comme ayant une distribution gaussienne avec une valeur moyenne $E_m$ et un écart type $\sigma(E)$ de formule :

$$\sigma(E) = \frac{1}{2\sqrt{2\ln(2)}}\Gamma(E)$$

où $\Gamma(E)$ est la résolution en énergie de la largeur à mi-hauteur, qui peut être exprimée, dans la présente invention pour le cas d'un détecteur SDD, par l'équation (2) suivante :

$$\Gamma(E) = \sqrt{5{,}546 \times F \times \epsilon \times E + \Delta^2}$$

où $F$ est le facteur de Fano (0,125 pour un détecteur Si), $\varepsilon$ est l'énergie moyenne pour la génération de la paire électron-trou (3,8 eV pour un détecteur Si) et $\Delta$ est le bruit électronique obtenu par l'ajustement, par exemple avec le logiciel Gnuplot™, de l'équation (2) d'une liste de valeurs $\Gamma$ mesurées.

## Approche quantitative sans standard

Afin de valider le procédé objet de l'invention, nous avons comparé les valeurs obtenues avec ce procédé avec celles obtenues en appliquant une approche quantitative sans standard ne tenant pas compte des effets de l'angle d'incidence et ceux dus à la texture de la surface, en l'occurrence celle développée par Ro et al. (document **[3]**).

L'approche quantitative sans standard développée par Ro et al. se base sur un calcul itératif de la concentration en réduisant l'écart entre les intensités simulées I$_{sim}$ et celles mesurées I$_{mes}$ pour les différents éléments chimiques i de l'échantillon, exprimé par un pic dans le spectre.

De nouvelles concentrations C$^{k+1}$ sont calculées à chaque itération k à partir des concentrations précédentes C$^k$ selon l'équation (3) suivante :

$$C_i^{k+1} = \frac{I_{i,mes}}{I_{i,sim}\sum_i \frac{I_{i,mes}}{I_{i,sim}} \times C_i^k} \times C_i^k$$

Par la suite, des données d'entrée propres aux caractéristiques de l'échantillon telles que la taille, la forme et la densité, et prédéterminées par l'analyse d'image pourront être introduites comme données d'entrée dans la simulation.

image MEB

L'image MEB permet d'obtenir des informations sur la taille et la forme d'un échantillon à étudier. Elle permet également d'obtenir la densité de l'échantillon lorsque ce dernier comporte une porosité de surface; cette détermination se base sur la mesure des éléments vides et/ou pleins formant la macroporosité de l'échantillon et est par exemple obtenue en suivant la méthode décrite dans le document **[4].** Si l'échantillon n'a pas de porosité de surface, sa densité est déterminée à partir de sa forme et de sa masse. Ainsi, les données d'entrée propres aux caractéristiques de l'échantillon telles que sa taille, sa forme et sa densité sont prédéterminées par l'analyse d'image obtenue par MEB. Et ces données prédéterminées peuvent alors être introduites comme données d'entrée dans la procédure quantitative corrigée selon la méthode P/B.

Méthode Pic/Bruit (P/B)

Dans le procédé objet de l'invention, l'approche quantitative sans standard décrite ci- dessus a été couplée à la méthode Pic/Bruit, la méthode Pic/Bruit étant utilisée pour compenser les pertes d'intensités.

Ainsi, les intensités $I_i$ des différents éléments chimiques i sont remplacées par les ratios $\left(I_P/I_{Bg}\right)_i$ qui représentent les rapports entre l'intensité du pic caractéristique émise par l'élément i et l'intensité du Bremsstrahlung qui lui correspond.

En combinant l'approche quantitative sans standard avec la méthode Pic/Bruit, l'équation (3) devient l'équation (4) suivante :

$$C_i^{k+1} = \frac{\left(I_P/I_{Bg}\right)_{i,mes}}{\left(I_P/I_{Bg}\right)_{i,sim} \times \sum_i \frac{\left(I_P/I_{Bg}\right)_{i,mes}}{\left(I_P/I_{Bg}\right)_{i,sim}} \times C_i^k} \times C_i^k$$

Les intensités correspondant au rayonnement Bremsstrahlung ($I_{Bg}$) mesuré ont été déterminées après la suppression, dans le spectre mesuré, des pics caractéristiques, des pics d'échappement et des pics de coïncidence. Ensuite, les intensités du fond ont été corrigées des effets instrumentaux du détecteur en utilisant l'équation (5) suivante (document **[5]**) afin de tenir compte des pertes d'intensités dues à l'efficacité de détection :

$$\varepsilon(E) \times \Delta\Omega = \frac{N_{Bg}(E) \times \Delta E}{\int_E^{E+dE} N_{Bg}(E)\, dE}$$

où $\varepsilon(E)$ est l'efficacité intrinsèque ; $\Delta\Omega$ est l'efficacité géométrique ; $N_{Bg}(E)$ est le nombre de photons X du rayonnement Bremsstrahlung émis par un échantillon massif à une énergie donnée E; $\Delta E$ est la largeur énergétique du canal dans le détecteur; $\int_E^{E+dE} N_{Bg}(E) \times dE$ est l'intensité théorique du rayonnement Bremsstrahlung calculée par le code MC dans l'intervalle énergétique [E ; E+dE].

Enfin, le fond continu résultant a été ajusté via l'équation (6) suivante :

$$I_{Bg}(E) = K \left( \frac{(E_o - E)}{E} \right)^a \frac{1}{1 + b(\gamma\chi) + c(\gamma\chi)^2}$$

avec $\gamma = E_0^{1,65} - E_{Bg}^{1,65}$ et $\chi = {d}/{E^m}$

où $K$ est un facteur d'étalonnage tenant compte de paramètres instrumentaux du dispositif de microanalyse, $E_0$ est l'énergie des électrons incidents, $a, b, c, d$ et $m$ sont des constantes d'ajustement.

Ainsi, l'ajustement du fond du Bremsstrahlung (dans le spectre mesuré) avec l'équation (6) s'effectue par l'ajustement des six paramètres $K, a, b, c, d, m$. En d'autres termes, la construction du fond continu (dans le spectre mesuré) obtenu à partir de l'équation (6) ne nécessite aucune connaissance préalable de la composition de l'échantillon et permet de prendre en compte des effets d'absorption et des pertes dues à l'efficacité du détecteur.

Les intensités dans le spectre simulé sont données en unités absolues et ne contiennent pas de largeur spectrale. Par conséquent, les intensités Bremsstrahlung simulées ont été calculées comme étant la moyenne des deux intensités situées de part et d'autre de chaque pic caractéristique.

Les intensités des rayons X caractéristiques dans le rapport $\left( {I_P}/{I_{Bg}} \right)_{i,sim}$ ont ensuite été déterminées en appliquant l'équation (1).

Afin de valider le procédé selon l'invention, nous avons tout d'abord effectué une micro-analyse sur deux échantillons massifs, dont la concentration est connue, en utilisant la procédure quantitative sans standard basée sur le modèle décrit par Ro *et al* (document [3]).

Nous avons utilisé un MEB-FEG de référence Merlin commercialisé par la société Carl Zeiss, couplé à un spectromètre EDS commercialisé par l'entreprise Oxford instruments. On applique une tension d'accélération apte à garantir l'excitation des raies X. Dans cet exemple de réalisation, une tension d'accélération de 10kV a été appliquée afin de garantir l'excitation de toutes les raies X étudiées et d'optimiser le volume d'interaction électron-matière pour minimiser les incertitudes liées au calcul des intensités simulées.

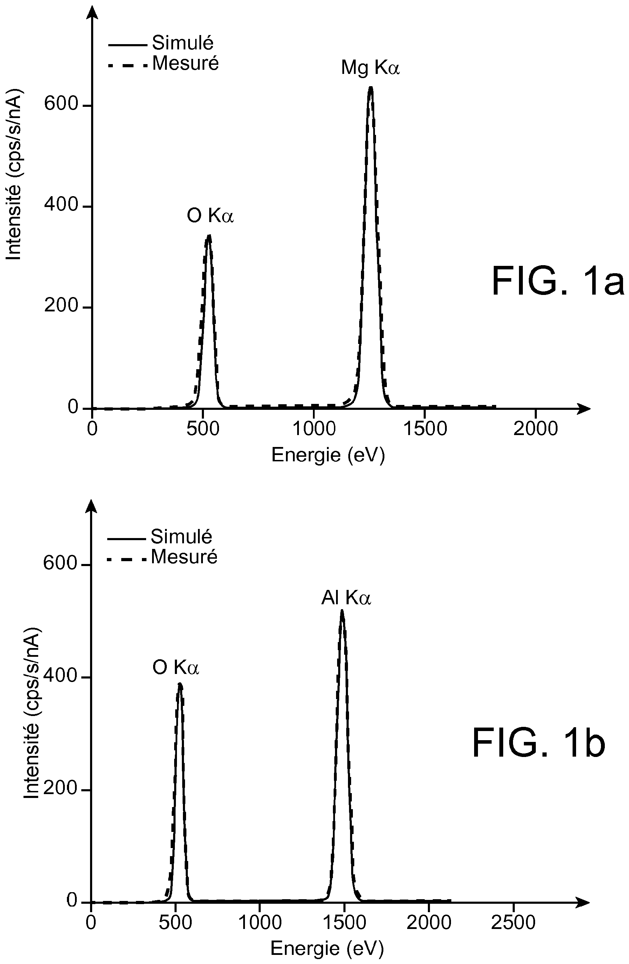

Les figures 1a et 1b illustrent une comparaison entre le spectre mesuré et le spectre simulé obtenu à l'issue de l'itération selon le procédé objet de l'invention, respectivement pour chacun des échantillons MgO (figure 1a), $Al_2O_3$ (figure 1b).

Les résultats de quantification correspondants sont présentés dans le tableau 1 ci-dessous. Dans les colonnes (CC) sont indiqués les résultats de quantification et dans les colonnes (Cn) sont indiquées les concentrations nominales. Il est à noter que le terme « concentration » est couramment utilisé dans le domaine technique, mais il s'agit d'un titre massique sans unité.

Les déviations relatives sont évaluées par la formule suivante :

$$Dev \% = \frac{|CC - Cn|}{Cn} \times 100$$

Tableau 1: comparaison entre les résultats de quantification (CC) et les concentrations nominales (Cn).

| | Mg (Z=12) | | Al (Z=13) | | O (Z=8) | |
|---|---|---|---|---|---|---|
| | CC (Dev %) | Cn | CC (Dev %) | Cn | CC (Dev %) | Cn |
| MgO (% massique) | 61,5 $\pm$ 0,3 (1,9%) | 60,3 | - | - | 38,5 $\pm$ 0,4 (3,0%) | 39,7 |
| $Al_2O_3$ (% massique) | - | - | 52,2 $\pm$ 0,2 (0,7%) | 52,9 | 47,8 $\pm$ 0,4 (1,4%) | 47,1 |

Les pourcentages massiques indiqués dans le tableau 1 correspondent à des « weight percentages » (wt. %) en anglais.

On observe que les résultats de quantification obtenus pour le cas des échantillons massifs MgO et $Al_2O_3$ sont satisfaisants avec des déviations relatives ne dépassant pas les 3%.

Pour valider le procédé selon l'invention, nous l'avons également appliqué pour réaliser une quantification d'une microparticule sphérique de verre, analysée à différents angles d'incidence du faisceau électronique. Nous avons ainsi pu montrer que le procédé selon l'invention permet une correction des effets de géométrie et de l'angle d'incidence, ainsi qu'une compensation des pertes d'intensités liées aux hétérogénéités (telle que porosité et/ou rugosité de surface) de l'échantillon analysé.

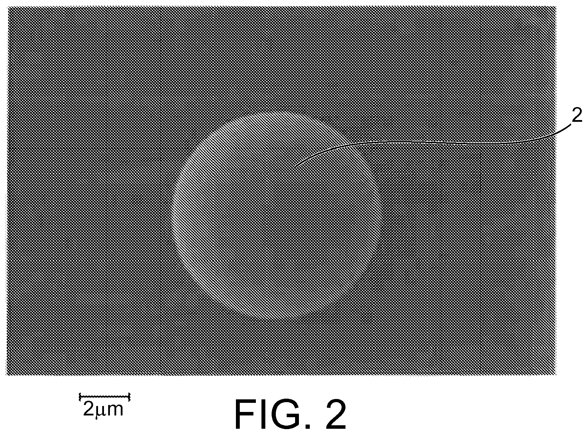

La figure 2 est une image MEB d'une particule sphérique 2 de verre déposée sur un substrat.

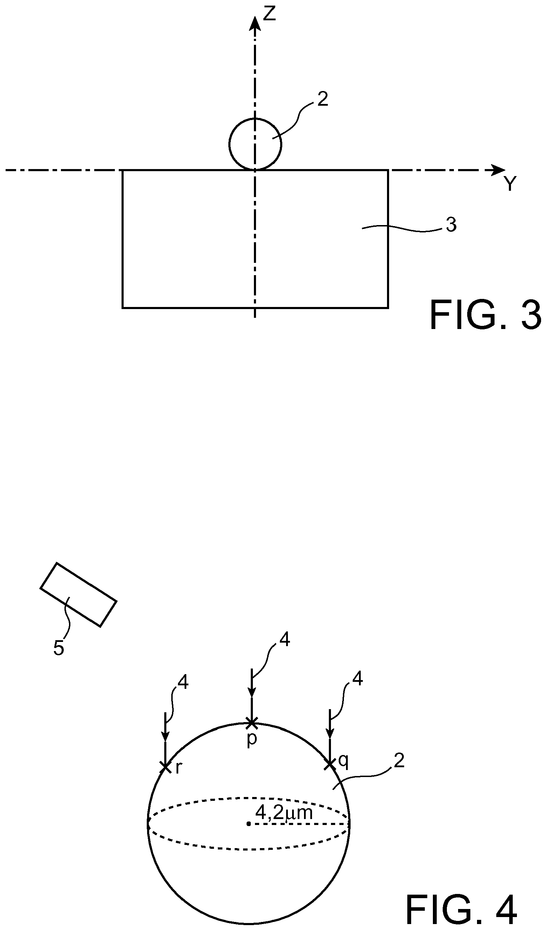

Afin de corriger les effets géométriques, la morphologie de la microparticule a été construite en utilisant un sous-ensemble du code MC ayant un mode de représentation graphique, ce qui permet de prendre en compte la géométrie de l'échantillon. La figure 3 est la construction de la configuration « particule sphérique 2 et substrat 3 » obtenu à l'aide de ce sous-ensemble.

On a pris en compte le substrat sur lequel repose la particule dans la construction géométrique du sous-ensemble, afin de prendre en compte les influences de celui-ci sur la détection des rayons X. En effet, quand une particule de petite taille est irradiée par un faisceau électronique, une partie des électrons incidents peut quitter la particule suite à des diffusions latérales et à des transmissions, et cette partie finit par exciter les atomes du substrat. De ce fait, l'influence de l'émission des rayons X par le substrat doit également être prise en compte dans la simulation.

L'analyse des particules a ensuite été effectuée à différents angles d'incidence du faisceau électronique. Dans la figure 4, on peut voir que le faisceau d'électrons 4 arrive sur la sphère 2 avec une incidence $\theta=0°$ au point p (c'est-à-dire au centre de la sphère de 4,2 $\mu$m de rayon), avec une incidence $\theta= - 40°$ au point q et une incidence $\theta=40°$ au point r. Les rayons X émis par la sphère 2 en réponse au faisceau d'électrons 4 et détectés par le détecteur 5 n'auront pas la même intensité selon que le faisceau d'électrons 4 aura impacté la sphère au centre (point p $(0 ; 0 ; z1)$), à 3 $\mu$m du point p (point q $(3 ; 0 ; z2)$) ou à - 3 $\mu$m du point p (point r $(-3 ; 0 ; z3)$) dans un repère $(x ;y ;z)$ ayant pour centre le centre de la sphère.

En effet, quand l'incidence du faisceau est différente de l'incidence normale, la distribution en profondeur du volume d'interaction électron-matière au sein de la particule varie, ce qui peut influencer l'émergence des rayons X et donc les résultats quantitatifs.

D'un point de vue simulation, les effets liés à l'angle d'incidence peuvent être corrigés si la distribution en profondeur des rayons X, à une incidence différente de la normale, est bien déterminée. En outre, la zone où se situe le détecteur et la surface de détection du détecteur doivent être prises en compte, de sorte que la configuration de détection dans la simulation soit similaire à celle dans un spectromètre réel.

Cependant, les détecteurs réels contiennent une surface de détection très petite et une simulation avec une telle configuration peut induire plusieurs incertitudes.

Le rapport *P/B* ne dépend ni de l'angle d'incidence, ni de l'efficacité du détecteur et il peut donc être utilisé pour apporter les corrections nécessaires.

La simulation a été effectuée en prenant une surface de détection hémisphérique et l'approche quantitative basée sur la méthode *P/B* a été utilisée pour prendre en compte les effets de l'angle d'incidence.

Dans le tableau 2 ci-dessous est présentée une comparaison entre les résultats de quantification obtenus par la procédure quantitative sans standard non corrigée (PQ) et celle obtenue après correction (PQC) pour deux angles d'incidence 0° et 40°.

L'intensité du bruit de fond dans la procédure quantitative corrigée a été déterminée via l'équation 7.

La composition de la microparticule qui a été utilisée est, selon le NIST (pour « National institute of Standards » en anglais), la suivante :

$$O \text{ (\% massique)} = 42,9 \pm 1,2$$

$$Mg \text{ (\% massique)} = 9,2 \pm 1,4$$

$$Si \text{ (\% massique)} = 25,6 \pm 1,7$$

$$Ca \text{ (\% massique)} = 11,2 \pm 2,3$$

$$Fe \text{ (\% massique)} = 11,2 \pm 2,3$$

| | θ=0° | | | | |
|---|---|---|---|---|---|
| | O (Z=8 (Err %)) | Mg (Z=12 (Err %)) | Si (Z=14 (Err %)) | Ca (Z=20 (Err %)) | Fe (Z=26 (Err %)) |
| PQ (% massique) | 42,5 ± 0,5 (1,0%) | 7,7 ± 0,3 (15,6%) | 27,6 ± 0,2 (7,7%) | 9,7 ± 0,6 (13,4%) | 12,5 ± 0,2 (11,4%) |
| PQC (% massique) | 44,5 ± 2,7 (3,7%) | 8,9 ± 0,6 (2,3%) | 23,3 ± 0,3 (8,8%) | 11,2 ± 1,2 (0,3%) | 11,9 ± 1,4 (6,6%) |

Tableau 2 : comparaison des résultats quantitatifs obtenus par la procédure quantitative sans standard non corrigée (PQ) et celle corrigée par la méthode P/B (PQC) à l'aide de l'équation (6).

| | θ=40° | | | | |
|---|---|---|---|---|---|
| | O (Z=8 (Err %)) | Mg (Z=12 (Err %)) | Si (Z=14 (Err %)) | Ca (Z=20 (Err %)) | Fe (Z=26 (Err %)) |
| PQ (% massique) | 21,1 ± 0,6 (50,8%) | 7,5 ± 0,3 (18,3%) | 33,4 ± 0,3 (30,4%) | 16,2 ± 0,2 (44,5%) | 21,8 ± 0,4 (94,4%) |
| PQC (% massique) | 39,9 ± 1,6 (6,8%) | 9,3 ± 0,4 (1,0%) | 26,9 ± 1,7 (5,0%) | 11,1 ± 0,7 (0,8%) | 12,7 ± 0,5 (13,4%) |

On observe que la quantification par la procédure non corrigée (PQ) à un angle d'incidence différent de la normale (ici θ=40°) est entachée de grandes erreurs pouvant atteindre 95% pour les basses concentrations.

La méthode de correction *P/B* en utilisant l'équation (6) a permis de corriger les effets d'incidence. Les erreurs relatives ont été significativement réduites et sont inférieures à 15% dans le cas d'une incidence différente de la normale.

## LISTE DES DOCUMENTS CITÉS

[1] Trincavelli J. et al., « Standardless quantification methods in électron probe microanalysis », Spectrochimica Acta Part B, 101 (2014), pages 76-85

[2] WO 2014/079849 A1

[3] Ro C.U. et al., « A Monte Carlo program for quantitative electron-induced X-ray analysis of individual particles », Anal. Chem. 75 (2003), pages 851-859

[4] WO 2017/089371 A1

[5] Merlet C. et al., « Absolute Détermination of Characteristic X-Ray Yields with a Wavelength-Dispersive Spectrometer », Microchimica Acta 155 (2006), pages 199-204

[6] Castellano et al., « Analytical model for the bremsstrahlung spectrum in the 0.25-20 keVphoton energy range », Spectrochimica Acta Part B 59 (2004), pages 313-319

## Revendications

1. Procédé d'analyse élémentaire d'un échantillon de type microparticule et/ou ayant une macroporosité de surface, le procédé comprenant :

- la réalisation d'une image de l'échantillon à l'aide d'un microscope électronique à balayage ;

- à partir de cette image, la détermination du caractère de l'échantillon, l'échantillon étant considéré comme étant une microparticule si sa plus grande dimension est supérieure ou égale à 1 μm et inférieure à 500 μm et/ou étant considéré comme ayant une macroporosité de surface si sa surface présente une pluralité d'éléments vides et/ou pleins dont la plus grande dimension est supérieure ou égale à 50 nm et inférieure ou égale à 4 μm ; et

* si l'échantillon est déterminé comme étant une microparticule, la détermination des dimensions, de la densité et de la forme de cette microparticule ;
* si l'échantillon est déterminé comme ayant une macroporosité de surface, la détermination des dimensions et de la forme des éléments vides et/ou pleins formant cette macroporosité, et la détermination de la densité de l'échantillon; ou
* si l'échantillon est déterminé comme étant une microparticule ayant une macroporosité de surface, la détermination des dimensions et de la forme de cette microparticule, la détermination des dimensions et de la forme des éléments vides et/ou pleins formant cette macroporosité, et la détermination de la densité de l'échantillon ;

- l'acquisition d'un spectre mesuré de raies X de l'échantillon à l'aide d'un dispositif de microanalyse, moyennant quoi on obtient $(I_P)_{i,\,mes}$ pour chacun des n pics du spectre mesuré, avec i=1 à n ;
- l'acquisition d'un spectre simulé de raies X de l'échantillon par simulation Monte Carlo en prenant en compte la densité, les dimensions et la forme de l'échantillon, ainsi que la résolution du dispositif de microanalyse, moyennant quoi on obtient $(I_P)_{i,\,sim}$ pour chacun des i pics du spectre simulé ;
- la détermination des intensités $(I_{Bg})_{i,\,mes}$ via la construction du fond continu du spectre mesuré en appliquant l'équation suivante :

$$I_{Bg}(E) = K \left( \frac{(E_o - E)}{E} \right)^a \frac{1}{1 + b(\gamma\chi) + c(\gamma\chi)^2}$$

avec $\gamma = E_0^{1,65} - E_{Bg}^{1,65}$ et $\chi = d/E^m$

où $K$ est un facteur d'étalonnage tenant compte de paramètres instrumentaux du dispositif de microanalyse, $E_0$ est l'énergie des électrons incidents en keV, $E$ est l'énergie du pic, $a$, $b$, $c$, $d$ et $m$ sont des constantes d'ajustement,
moyennant quoi on obtient $(I_{Bg})_{i,\,mes}$ pour chacun des i pics du spectre mesuré ;

- le calcul itératif des concentrations $C_i$ des éléments de l'échantillon en appliquant l'équation suivante :

$$C_i^{k+1} = \frac{\left( I_P/I_{Bg} \right)_{i,mes}}{\left( I_P/I_{Bg} \right)_{i,sim} \times \sum_i \frac{\left( I_P/I_{Bg} \right)_{i,mes}}{\left( I_P/I_{Bg} \right)_{i,sim}} \times C_i^k} \times C_i^k$$

l'itération commençant avec k=1 et étant arrêtée lorsque :

$$C_{k+1} - C_k \sim 10^{-3} \; (\text{à} \pm 10^{-4})$$

**Patentansprüche**

1. Verfahren zur Elementaranalyse einer Probe vom Mikropartikeltyp und/oder mit einer Oberflächenmakroporosität, wobei das Verfahren Folgendes umfasst:

- Erstellen eines Bilds der Probe mit Hilfe eines Rasterelektronenmikroskops;
- Bestimmen eines Merkmals der Probe anhand dieses Bilds, wobei die Probe als Mikropartikel betrachtet wird, wenn ihre größte Abmessung größer oder gleich 1 μm und kleiner als 500 μm ist, und/oder als eine Oberflächenmakroporosität aufweisend betrachtet wird, wenn ihre Oberfläche eine Vielzahl von leeren und/oder vollen Elemente aufweist, deren größte Abmessung größer oder gleich 50 nm und kleiner oder gleich 4 μm ist; und

* wenn bestimmt wird, dass die Probe ein Mikropartikel ist, Bestimmen der Abmessungen, der Dichte und der Form dieses Mikropartikels;
* wenn bestimmt wird, dass die Probe eine Oberflächenmakroporosität aufweist, Bestimmen der Abmessungen und der Form der leeren und/oder vollen Elemente, die diese Makroporosität bilden, und Bestimmen der Dichte der Probe; oder
* wenn bestimmt wird, dass die Probe ein Mikropartikel mit einer Oberflächenmakroporosität ist, Bestimmen der Abmessungen und der Form dieses Mikropartikels, Bestimmen der Abmessungen und der Form der leeren und/oder vollen Elemente, die diese Makroporosität bilden, und Bestimmen der Dichte der Probe;

- Erfassen eines gemessenen Röntgenlinienspektrums der Probe mit Hilfe einer Mikroanalysevorrichtung, wodurch $(I_p)_{i,\,mes}$ für jeden der n Peaks des gemessenen Spektrums erhalten wird, wobei i=1 bis n;
- Erfassen eines simulierten Röntgenlinienspektrums der Probe durch eine Monte-Carlo-Simulation, unter Berücksichtigung der Dichte, der Abmessungen und der Form der Probe sowie der Auflösung der Mikroanalysevorrichtung, wodurch $(I_p)_{i,\,sim}$ für jeden der i Peaks des simulierten Spektrums erhalten wird;
- Bestimmen der Intensitäten $(I_{Bg})_{i,\,mes}$ über die Konstruktion des kontinuierlichen Hintergrunds des gemessenen Spektrums, indem die folgende Gleichung angewandt wird:

$$I_{Bg}(E) = K \left( \frac{(E_o - E)}{E} \right)^a \frac{1}{1 + b(\gamma\chi) + c(\gamma\chi)^2}$$

wobei $: \gamma = E_0^{1,65} - E_{Bg}^{1,65}$ und $\chi = d/E^m$

wobei $K$ ein Kalibrierungsfaktor ist, der instrumentelle Parameter der Mikroanalysevorrichtung berücksichtigt, $E_0$ die Energie der einfallenden Elektronen in keV ist, $E$ die Energie des Peaks ist, $a$, $b$, $c$, $d$ und $m$ Anpassungskonstanten sind,
wodurch $(I_{Bg})_{i,\,mes}$ für jeden der i Peaks des gemessenen Spektrums erhalten wird;

- iteratives Berechnen der Konzentrationen $C_i$ der Elemente der Probe, indem die folgende Gleichung angewandt wird:

$$C_i^{k+1} = \frac{\left( I_P/I_{Bg} \right)_{i,mes}}{\left( I_P/I_{Bg} \right)_{i,sim} \times \sum_i \frac{\left( I_P/I_{Bg} \right)_{i,mes}}{\left( I_P/I_{Bg} \right)_{i,sim}} \times C_i^k} \times C_i^k$$

wobei die Iteration mit k=1 beginnt und gestoppt wird, wenn:

$$C_{k+1} - C_k \sim 10^{-3} \ (\text{à} \pm 10^{-4})$$

.

**Claims**

1. Method for the elementary analysis of a sample of the microparticle type and/or having a surface microporosity, the method comprising:

   - producing an image of the sample by means of a scanning electron microscope;
   - from this image, determining the character of the sample, the sample being considered a microparticle if its largest dimension is greater than or equal to 1 $\mu$m and less than 500 $\mu$m and/or being considered to have surface macroporosity if its surface has a plurality of void or solid elements the largest dimension of which is greater than or equal to 50 nm and less than or equal to 4 $\mu$m; and

     * if the sample is determined as being a microparticle, determining the dimensions, density and form of this microparticle;
     * if the sample is determined as having surface macroporosity, determining the dimensions and form of the void and/or solid elements forming this macroporosity, and determining the density of the sample; or
     * if the sample is determined as being a microparticle having surface macroporosity, determining the dimensions and form of this microparticle, determining the dimensions and form of the void and/or solid elements forming this macroporosity, and determining the density of the sample;

   - acquiring a measured spectrum of X-rays of the sample by means of a microanalysis device, by means of which $(I_p)_{i, \text{mes}}$ is obtained for each of the n peaks of the measured spectrum, with i = 1 to n;
   - acquiring a simulated spectrum of X-rays of the sample by Monte Carlo simulation taking into account the density, the dimensions and the form of the sample, as well as the resolution of the microanalysis device, by means of which $(I_p)_{i, \text{sim}}$ is obtained for each of the i peaks of the simulated spectrum;
   - determining the intensities $(I_{Bg})_{i, \text{mes}}$ via the construction of the continuous background of the spectrum measured by applying the following equation:

$$I_{Bg}(E) = K \left( \frac{(E_o - E)}{E} \right)^a \frac{1}{1 + b(\gamma\chi) + c(\gamma\chi)^2}$$

   with $\gamma = E_0^{1,65} - E_{Bg}^{1,65}$ and $\chi = {}^d\!/_{E^m}$

   where K is a sampling factor taking account of instrument parameters of the microanalysis device, $E_0$ is the energy of the incident electrons in keV, $E$ is the energy of the peak, *a, b, c, d* and *m* are adjustment constants,
   by means of which $(I_{Bg})_{i, \text{mes}}$ is obtained for each of the i peaks of the spectrum measured;

   - the iterative calculation of the concentrations $C_i$ of the elements of the sample applying the following equation:

$$C_i^{k+1} = \cfrac{\left(\left.I_P\middle/I_{Bg}\right)\right._{i,mes}}{\left(\left.I_P\middle/I_{Bg}\right)\right._{i,sim} \times \sum_i \cfrac{\left(\left.I_P\middle/I_{Bg}\right)\right._{i,mes}}{\left(\left.I_P\middle/I_{Bg}\right)\right._{i,sim}} \times C_i^k} \times C_i^k$$

the iteration commencing with k = 1 and being stopped when:

$$C_{k+1} - C_k \sim 10^{-3} \ (to \pm 10^{-4})$$

FIG. 1a

FIG. 1b

2μm

FIG. 2

FIG. 3

FIG. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014079849 A1

- WO 2017089371 A1

**Littérature non-brevet citée dans la description**

- **TRINCAVELLI J. et al.** Standardless quantification methods in électron probe microanalysis. *Spectrochimica Acta Part B,* 2014, vol. 101, 76-85
- **RO C.U. et al.** A Monte Carlo program for quantitative electron-induced X-ray analysis of individual particles. *Anal. Chem.,* 2003, vol. 75, 851-859

- **MERLET C. et al.** Absolute Détermination of Characteristic X-Ray Yields with a Wavelength-Dispersive Spectrometer. *Microchimica Acta,* 2006, vol. 155, 199-204
- **CASTELLANO et al.** Analytical model for the bremsstrahlung spectrum in the 0.25-20 keVphoton energy range. *Spectrochimica Acta Part B,* 2004, vol. 59, 313-319